# DEMANDE DE BREVET EUROPEEN

(11) **EP 1 235 021 A1**
(43) Date de publication de la demande: **28.08.2002**
(21) Numéro de dépôt: 02290361.1
(22) Date de dépôt: 14.02.2002
(51) Int. Cl.: F16L 23/032, F01N 7/18

(54) **Brides d'échappement minces**

(30) Priorité: 22.02.2001 FR 0102375
(71) Demandeur: Renault, 92100 Boulogne Billancourt (FR)
(72) Inventeur: Lefebvre, Lionel, 78280 Guyancourt (FR); Thillier, Nicolas, 78000 Versailles (FR); Devaux, Bertrand, 78960 Voisins le Bretonneux (FR)

(57) **Abrégé**

La bride d'échappement comporte une zone de col (4, 24) délimitant une ouverture (5, 25) pour le passage des gaz, une zone (6, 26) formant portée de joint entourant la zone de col, et des moyens de serrage de la bride comportant au moins deux perçages (8, 28) permettant le serrage de la bride à l'aide de boulons ou analogues contre une contre-bride après interposition d'un joint d'étanchéité. La bride est constituée d'une tôle d'acier mince d'une épaisseur de 2 à 3,5 mm, et comporte, en outre, des moyens (9,29) permettant d'appliquer au joint d'étanchéité interposé un effort substantiellement moindre que celui appliqué aux zones de serrage.

## Description

L'invention concerne un nouveau type de brides d'échappement.

La liaison entre le collecteur d'échappement d'un moteur et la descente d'échappement est constituée globalement de trois pièces : une bride côté moteur, un joint d'étanchéité, une bride côté ligne.

Deux genres de brides sont actuellement utilisés : les brides deux points et les brides trois points. Toutes ces brides présentent une face d'appui plane et sont pratiquement indéformables, étant réalisées en acier forgé ou en tôle découpée et ayant une forte épaisseur (7 à 8 mm). Le choix de la forte épaisseur est basé sur le raisonnement qu'écraser fortement un joint entre deux pièces très raides (car épaisses) et présentant des surfaces d'appui planes permet d'assurer de manière certaine l'étanchéité. Le fort dimensionnement des pièces permet aussi d'avoir un relatif optimisme vis-à-vis de l'endurance de la liaison.

Ces brides présentent des inconvénients. En effet, la totalité de l'effort de serrage de la liaison passe par le joint, qui, de ce fait, crée une réaction importante sur les brides et notamment sur la zone en contact étanche avec le joint.

De plus, les défauts de planéité des pièces (sur pièce nues ou inhérents aux contraintes thermiques provoquées par la soudure des tubulures) ne sont pas corrigés mais s'additionnent pour aggraver dans certaines zones les réactions sur les brides. L'existence de ces défauts de planéité entraîne des opérations de reprise sur les pièces pour garantir une bonne planéité des zones d'appui du joint sur les brides.

Enfin, ces brides sont lourdes et, conséquemment, coûteuses.

Il existe donc un besoin pour des brides d'échappement plus légères et moins coûteuses que celles actuellement utilisées.

La présente invention vise à fournir de telles brides.

Plus précisément, l'invention concerne une bride d'échappement qui comporte une zone de col délimitant une ouverture pour le passage des gaz, une zone formant portée de joint entourant la zone de col, et des moyens de serrage de la bride comportant au moins deux perçages permettant le serrage de la bride à l'aide de boulons ou analogues contre une contre-bride après interposition d'un joint d'étanchéité, caractérisée en ce que la bride est constituée d'une tôle d'acier mince d'une épaisseur de 2 à 3,5 mm, et en ce qu'elle comporte, en outre, des moyens permettant d'appliquer au joint d'étanchéité interposé un effort substantiellement moindre que celui appliqué aux zones de serrage.

La présente invention est basée sur l'idée de répartir l'effort de serrage de la liaison en deux composantes très inégales:
- une première composante relativement faible située dans la zone de portée de la bride avec le joint et juste nécessaire à un écrasement suffisant du joint pour obtenir l'étanchéité, et
- une deuxième composante relativement forte , située au voisinage des boulons de fixation, dans les zones de serrage, qui sera dissipée au niveau de ces boulons par matage.

Selon un premier mode de réalisation, on obtient cette répartition de l'effort de serrage en autorisant un déplacement relatif de la zone formant portée de joint par rapport aux zones de serrage de la bride. A cette fin, lesdits perçages sont prévus dans des oreilles reliées à la surface formant portée de joint par un bras de liaison flexible. L'effort de serrage est alors, pour l'essentiel, utilisé à maintenir la bride et non plus à comprimer le joint.

Ceci présente les avantages suivants :
- la bride à oreilles liées de façon flexible permet d'assurer un parallélisme moyen entre les deux surfaces d'appui du joint, quelle que soit la coplanéité des deux brides assemblées ;
- les réserves élastiques qu'apportent les liaisons flexibles permettent de minimiser celle demandée au joint. De plus, "l'addition des souplesses" permet un meilleurs traitement des vibrations ;
- l'ordre de serrage n'affecte pas la pression sur le joint qui se trouve de ce fait uniforme au défaut près de la planéité des surfaces d'appui, le serrage des oreilles s'effectuant sur une contrebride.

Dans ce mode de réalisation, seules les liaisons flexibles des oreilles se déforment. L'effort de serrage appliqué sur le joint est uniforme et ajusté juste à ce qui est nécessaire.

Selon un deuxième mode de réalisation, on obtient cette répartition de l'effort de serrage en faisant en sorte que la zone formant portée de joint soit légèrement en retrait par rapport aux zones de serrage, de façon que, après assemblage de la bride avec sa contre-bride, le joint se trouve logé dans une sorte de "logement". Bien entendu, la hauteur de ce logement doit être moindre que la hauteur du joint à l'état libre. En pratique, l'importance du retrait entre la zone formant portée de joint et les zones de serrage est de l'ordre de quelques dixièmes de millimètre. Plus la hauteur du "logement" en question se rapproche de la hauteur du joint à l'état libre, plus l'effort appliqué au joint sera faible, et inversement.

La tôle d'acier doit avoir une épaisseur d'au moins 2 mm car, en dessous de cette valeur, la bride n'aurait pas une longévité suffisante en service. Elle ne doit pas avoir une épaisseur supérieure à 3,5 mm car elle deviendrait alors trop lourde et coûteuse. De préférence, la tôle d'acier utilisée pour réaliser la bride a une épaisseur d'environ 2,5 mm.

La description qui va suivre, faite en se référant aux dessins annexés, fera bien comprendre l'invention.

Les figures 1 et 2 sont des vues en perspective, de dessus et de dessous, respectivement, d'un premier mode de réalisation de bride selon l'invention,

la figure 3 est une vue en coupe verticale de la bride des figures 1 et 2, selon la ligne III-III de la figure 1.

la figure 4 est une vue en plan d'un deuxième mode de réalisation de bride selon l'invention,

la figure 5 est une vue en coupe selon la ligne V-V de la figure 4, et

la figure 6 est une vue en coupe illustrant le montage de la bride des figures 4 et 5 avec une contre-bride identique avec interposition d'un joint d'étanchéité.

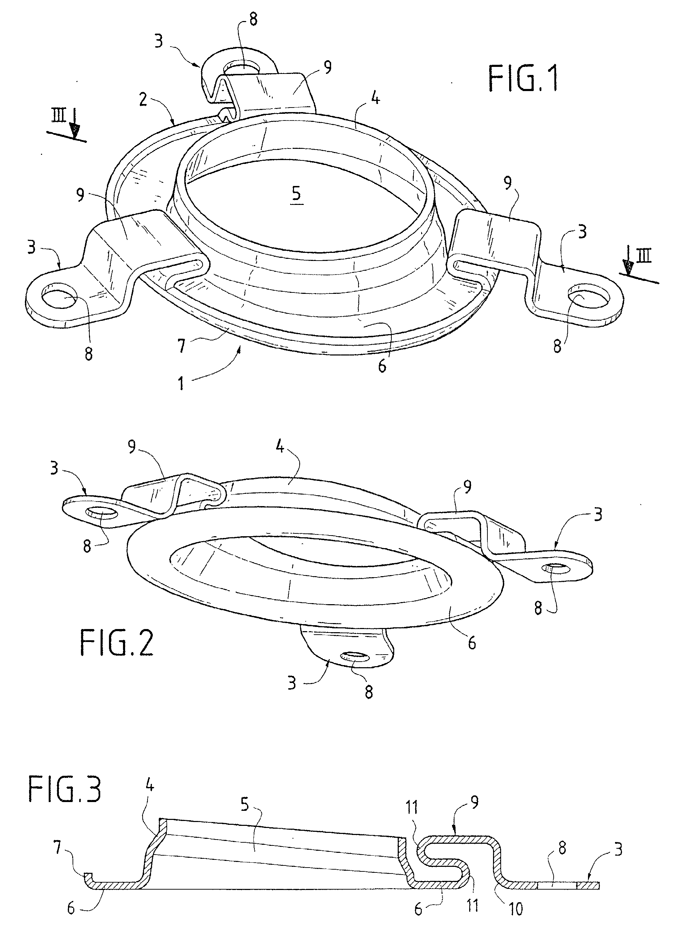

Les figures 1-3, illustrent une bride 1, d'un seul tenant, comprenant une portion principale 2 de forme générale annulaire et trois oreilles 3 disposées à 120° les unes des autres et reliées à la portion 2 par une liaison flexible. La portion principale 2 se compose d'un col 4 délimitant une ouverture 5, destinée à laisser passer les gaz d'échappement et une surface annulaire 6 sensiblement plane formant portée de joint, munie à sa périphérie d'un petit rebord 7 visant à rigidifier le tout. Les oreilles 3 sont pourvues de perçages 8 destinés à permettre le serrage des brides à l'aide de boulons (non représentés) et sont reliées à la portion principale 2 par des bras de liaison 9 comportant une série de pliures telles qu'ils présentent un coude 10 à 90° suivi de deux coudes successifs 11 à 180°. En service, le profil replié du bras 9 lui confère une flexibilité ou capacité de déformation telle que seule une faible partie de l'effort appliqué aux oreilles lors du serrage des brides est transmise à la surface annulaire 6, la partie de l'effort transmise étant juste suffisante pour exercer une compression du joint d'étanchéité assurant l'étanchéité.

La bride 1 peut être réalisée par emboutissage d'une tôle d'acier mince, par exemple de 2,5 mm d'épaisseur, suivie d'un pliage des bras 9.

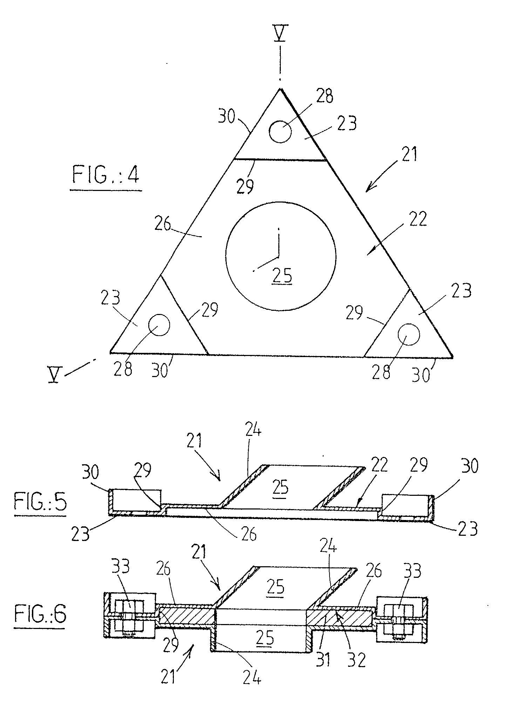

Les figures 4 et 5 illustrent une bride 21 comprenant une portion principale 22 et trois pattes 23. La position principale 22 se compose d'un col 24 délimitant une ouverture 25 destinée à laisser passer les gaz d'échappement et une surface en forme générale d'hexagone irrégulier 26 sensiblement plane formant portée de joint. Les pattes 23 sont pourvues de perçages 28 destinés à permettre le serrage des brides à l'aide de boulons (non représentés) et sont reliées à la portion principale 22 par une paroi intermédiaire 29 perpendiculaire à la fois aux pattes 23 et à la portion principale 22. Les pattes sont reliées à trois côtés non adjacents de la portion 22 de sorte que, vu en plan, l'ensemble portion 22-pattes 23 a l'aspect d'un triangle équilatéral. Cependant, les pattes 23 ne sont pas situées dans le même plan que la portion 22, étant situées dans un plan décalé vers la partie antérieure de la bride de quelques dixièmes de millimètre par rapport au plan de la portion 22. A leur périphérie, les pattes 23 présentent un rebord 30 destiné à les rigidifier.

La figure 6 illustre un assemblage de deux brides 21 telles qu'illustrées sur les figures 4 et 5 avec interposition d'un joint d'étanchéité 31. Comme on le voit, la surface 26 qui est en retrait de quelques millimètres par rapport aux pattes 23, forment, avec les parois 29, une sorte de logement 32 dans lequel est disposé le joint 31. Le réglage du retrait permet d'ajuster facilement l'effort de compression appliqué au joint après serrage des boulons de fixation 33 qui maintiennent les brides 21 assemblées.

Il convient de noter que le mode de réalisation des figures 1-3 pourrait comporter des oreilles, non plus coplanaires avec la zone formant portée, mais en retrait par rapport à cette zone, comme dans le cas du mode de réalisation des figures 4-6.

Il va de soi que les modes de réalisation décrits et représentés n'ont été donnés qu'à titre d'exemples.

## Revendications

1. Bride d'échappement comportant une zone de col (4, 24) délimitant une ouverture (5, 25) pour le passage des gaz, une zone (6, 26) formant portée de joint entourant la zone de col, et des moyens de serrage de la bride comportant au moins deux perçages (8, 28) permettant le serrage de la bride à l'aide de boulons ou analogues contre une contre-bride après interposition d'un joint d'étanchéité, **caractérisée en ce que** la bride est constituée d'une tôle d'acier mince d'une épaisseur de 2 à 3,5 mm, et **en ce qu'**elle comporte, en outre, des moyens (9,29) permettant d'appliquer au joint d'étanchéité interposé un effort substantiellement moindre que celui appliqué aux zones de serrage.

2. Bride selon la revendication 1, **caractérisée en ce que** lesdits perçages sont prévus dans des oreilles (3) reliées à la surface formant portée de joint (6) par un bras de liaison flexible (9).

3. Bride selon la revendication 2, **caractérisée en ce que** le bras de liaison (9) présente un coude (10) à 90° suivi de deux coudes successifs (11) à 180°.

4. Bride selon la revendication 1, **caractérisée en ce que** la zone formant portée de joint (26) est légèrement en retrait par rapport aux zones de serrage (23).

5. Bride selon la revendication 4, **caractérisée en ce que** ledit retrait est de l'ordre de quelques dixièmes de millimètre.

6. Bride selon l'une quelconque des revendications 1 à 5, **caractérisée en ce qu'**elle est réalisée à partir d'une tôle d'acier d'environ 2,5 mm d'épaisseur.

7. Bride selon l'une quelconque des revendications 1 à 6, **caractérisée en ce qu'**elle est réalisée par emboutissage.
